# EUROPEAN PATENT APPLICATION

(11) **EP 2 544 430 A2**
(43) Date of publication of application: **09.01.2013**
(21) Application number: 12175071.5
(22) Date of filing: 05.07.2012
(51) Int. Cl.: H04M 1/05, G06F 1/16, G06F 3/033

(54) **Wireless headset with touch pen**

(30) Priority: 08.07.2011 TW 100124237
(71) Applicant: Lin, Pi-Fen, Taipei City 111 (TW)
(72) Inventor: Lin, Pi-Fen, Taipei City 111 (TW)
(74) Representative: Viering, Jentschura & Partner

(57) **Abstract**

A wireless headset with touch pen includes a housing (1), a controlling circuit unit (3), an ear piece (2), and a touch pen (5). The controlling circuit unit (3) is disposed within the housing (1), and the ear piece (2) is arranged on the housing (1) and connected electrically to the controlling circuit unit (3). The touch pen (5) is arranged on the housing (1) and has a tip portion (51). By combining the touch pen (5) with the wireless headset, the wireless headset with touch pen (5) has both wireless communication and touch input functionalities. The user can also find the touch pen (5) more easily.

## Description

### BACKGROUND OF THE INVENTION

### Field of the Invention

The instant disclosure relates to a wireless headset; more particularly, to a wireless headset with touch pen.

### Description of Related Art

The advance in modern technology has allowed the development of new communication devices. These multi-functional devices provide more convenience and services to the users. In the field of telecommunication, the use of headphones is very common. The existing headphones usually have a housing equipped with an ear piece. The headphones can be connected to a signal source, such as a MP3 portable audio player, mobile phone, personal digital assistant (PDA), laptop computer, tablet computer, etc. Along with the in-ear versions, the headphones allow voice transmission from the signal source to the listener at a high quality. The headset, which is a headphones combined with a microphone, or one headphone with a microphone, is a classic consumer product. A primary example is the Bluetooth mobile phone headset. The Bluetooth is a wireless technology that provides high quality voice communication. Unlike the handheld mobile phones, the Bluetooth headset can be worn by the user to make hands-free communication, which provides greater convenience.

In a continuous effort to provider greater convenience to the users, the touch screen technology has been adopted to improve the user interface. For convenience, the touch screen often comes with a touch pen, or a stylus, for the user to make touch inputs or writes on the screen. However, the touch pen normally has a slender body, which makes the user difficult to locate it sometimes.

### SUMMARY OF THE INVENTION

The instant disclosure provides a wireless headset with a built-in touch pen. The touch pen can be easily located for convenience.

The wireless headset with touch pen of the instant disclosure comprises a housing, a controlling circuit unit, an ear piece, and a touch pen. The controlling circuit unit is disposed within the housing, while the ear piece is arranged on the housing and connected electrically to the controlling circuit unit. The touch pen is disposed on the housing and has a tip portion.

The instant disclosure also provides a wireless headset having a touch pen fixedly arranged thereon.

The instant disclosure further provides a wireless headset having a touch pen removably arranged thereon.

The instant disclosure provides yet another wireless headset having a touch pen retractably arranged thereon.

Besides providing wireless communication, the wireless headset with touch pen of the instant disclosure also has the touch input functionality to navigate the touch screen.

Besides being portable, the wireless headset is usually bigger and more visible than the slender touch pen. Thus, by combining the wireless headset with the touch pen, the touch pen can be found by the user more easily.

In order to further appreciate the characteristics and technical contents of the instant disclosure, references are hereunder made to the detailed descriptions and appended drawings in connection with the instant disclosure. However, the appended drawings are merely shown for exemplary purposes, rather than being used to restrict the scope of the instant disclosure.

### BRIEF DESCRIPTION OF THE DRAWINGS

Fig. 1 is a perspective view of a wireless headset with touch pen for a first embodiment of the instant disclosure.

Fig. 2 is a plane-view of the Fig. 1.

Fig. 3 is a perspective view of a wireless headset with touch pen for a second embodiment of the instant disclosure.

Fig. 4 is a perspective view of a wireless headset with touch pen for a third embodiment of the instant disclosure.

Fig. 5 is another perspective view of the wireless headset with touch pen for the third embodiment of the instant disclosure.

### DETAILED DESCRIPTION OF PREFFERED EMBODIMENTS

### [First Embodiment]

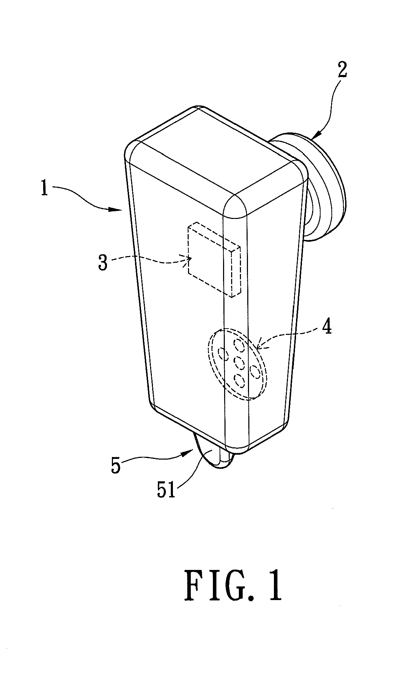

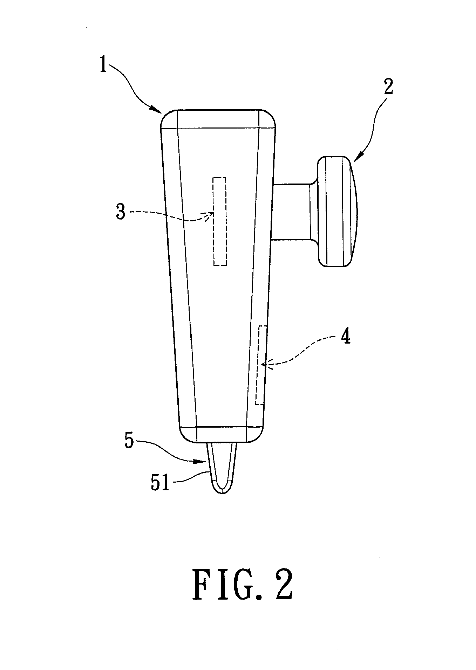

Please refer Figs. 1 and 2, which show a wireless headset with touch pen of the instant disclosure. For this embodiment, the wireless headset with touch pen includes a microphone, which is optional.

The wireless headset with touch pen comprises a housing 1, an ear piece 2, a controlling circuit unit 3, a microphone 4, and a touch pen 5. The housing 1 can be a hollowed enclosure for receiving the controlling circuit unit 3. The ear piece 2 and the microphone 4 are disposed on the housing 1. Normally, the ear piece 2 and the microphone 4 are oppositely arranged, but the actual mounting arrangement thereof is not restricted thereto. The ear piece 2 can protrude outwardly from the housing 1, but is not restricted thereto. The protruding ear piece 2 can be fit snugly outside of the ear canal. The wireless headset with touch pen in accordance with the instant disclosure may utilize various ear pieces of different style and design, including ear pieces that are designed to fit into/on a human ear with an ear bud, the ones with complimentary hooks around the ear, or the ones equipped with other means to be worn by the user without restriction.

The ear piece 2 and the microphone 4 are both connected electrically to the controlling circuit unit 3. The controlling circuit unit 3 is a wireless controlling circuit module capable of receiving electrical signals from the portable audio player, computer, mobile phone, telephone, etc. The wireless signal transmission can be achieved by Bluetooth or infrared signal. The received electrical signal is then converted to sound waves by the controlling circuit unit 3 and fed to the ear piece 2. This controlling circuit unit 3 is a well known technical feature, so no further details are given herein. Alternatively, the microphone 4 can be obsoleted to form a wireless headphone.

The touch pen 5 can be either fixedly or removably arranged on the housing 1. For the instant embodiment, the touch pen 5 is fixedly arranged thereon. In other words, the touch pen 5 may be formed integrally with the housing 1 or secured thereon by other adhesive or mechanical means. The material, shape, and size of the touch pen 5 is not restricted but can be varied accordingly. The touch pen 5 has a tip portion 51, which can have a cylindrical shape or any other shape. The tip portion 51 protrudes from the housing 1. Preferably, the tip portion 51 protrudes downwardly from the bottom end portion of the housing 1, but is not restricted thereto. The shape of the tip portion 51 is not restricted. Generally, the tip portion 51 is designed with a smooth round surface to provide a smooth stroke. When the user operates a touch screen with the touch pen 5, the central processing unit (CPU) would respond according to the input location of the tip portion 51.

The wireless headset with touch pen of the instant disclosure allows the user to operate a touch screen in addition to wireless communication. The housing 1 acts as the pen shaft for the user to hold the touch pen 5 to navigate on the touch screen.

Besides being portable, the wireless headset is usually bigger and more visible than the slender touch pen 5. Thus, by combining the wireless headset with the touch pen 5, the touch pen 5 can be found by the user more easily.

### [Second Embodiment]

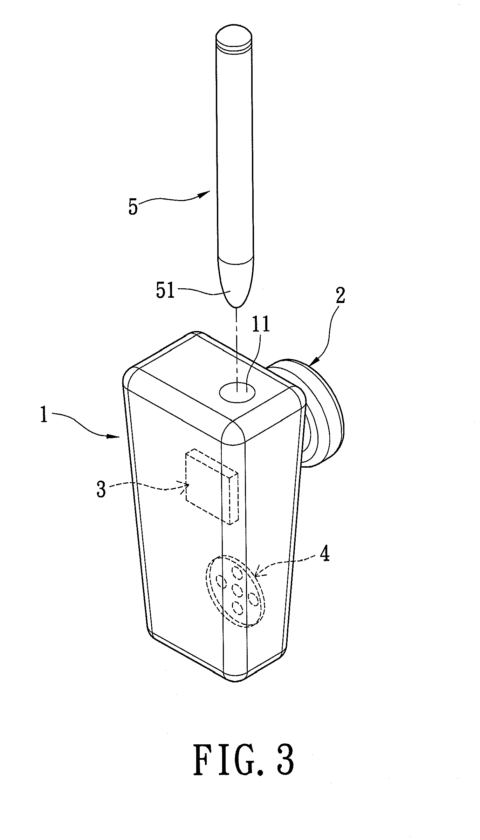

Fig. 3 shows a second embodiment of the instant disclosure. For this embodiment, the touch pen 5 is removably disposed on the housing 1. In other words, an inserting hole 11 is formed on the housing 1 to store the touch pen 5. The location and direction of the inserting hole 11 is not restricted. For example, the inserting hole 11 can be formed toward the middle portion or the side portion of the housing 1. For this embodiment, the inserting hole 11 is formed toward the middle portion of the housing 1. The touch pen 5 can fit snugly in the inserting hole 11, with the tip portion 51 protruding preferably from the bottom end portion of the housing 1. The user can hold the housing 1 to operate the touch pen 5 on the touch screen. Alternatively, the touch pen 5 can also be removed from the housing 1 to be used independently.

### [Third Embodiment]

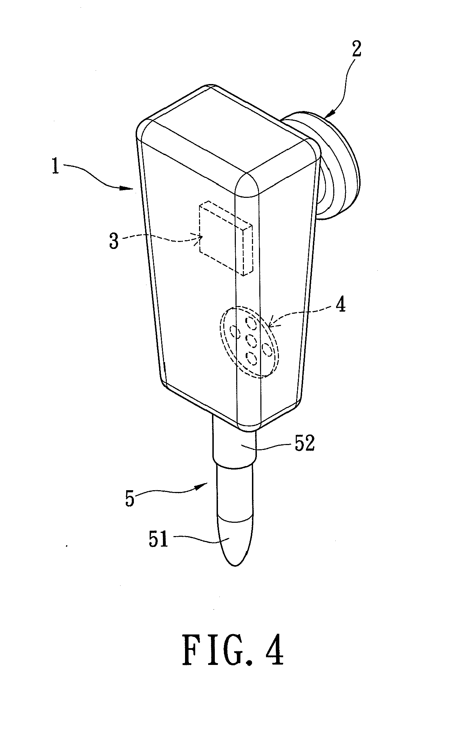

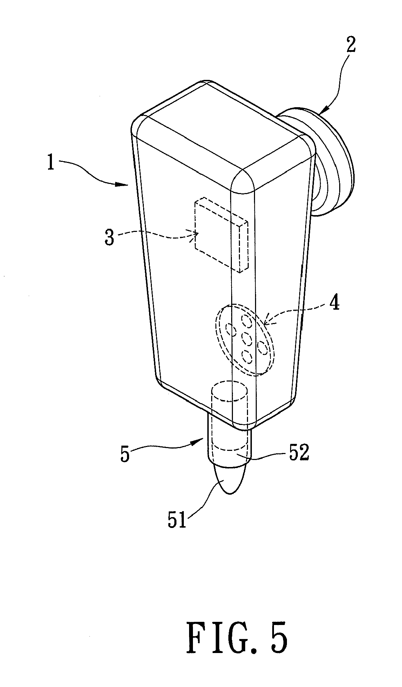

Please refer to Figs. 4 and 5, which show a third embodiment of the instant disclosure. For this embodiment, the touch pen 5 is retractably disposed on the housing 1. In other words, a sleeve 52 is arranged on the housing 1. The sleeve 52 may be arranged toward the central portion or the outer portion of the housing 1. The shapes of the sleeve 52 and the tip portion 51 are not restricted. For this embodiment, the tip portion 51 is cylindrically shaped, and the sleeve 52 is hollowed and cylindrically shaped correspondingly. The tip portion 51 of the touch pen 5 is movably disposed in the sleeve 52. In other words, the tip portion 51 of the touch pen 5 is retractably arranged on the housing 1. The tip portion 51 can selectively extend outwardly from the sleeve 52 or retract inwardly therein. The tip portion 51 is fit snugly to the sleeve 52. To use the touch pen 5, the user can expose the tip portion 51 from the sleeve 52 to navigate the touch screen. When the touch pen 5 is not being used, the tip portion 51 can be retracted into the sleeve 52 for storage.

For variant, the instant disclosure can further include a controlling member (not shown). The controlling member is coupled to the tip portion 51 to provide ease for moving it in and out of the sleeve 52. Moreover, to provide accurate displacement of the tip portion 51, a guiding mechanism (not shown) can be disposed between the tip portion 51 and the sleeve 52.

The descriptions illustrated *supra* set forth simply the preferred embodiments of the instant disclosure; however, the characteristics of the instant disclosure are by no means restricted thereto. All changes, alternations, or modifications conveniently considered by those skilled in the art are deemed to be encompassed within the scope of the instant disclosure delineated by the following claims.

## Claims

1. A wireless headset with touch pen, comprising:
a housing (1);
a controlling circuit unit (3) disposed in the housing (1);
an ear piece (2) disposed on the housing (1); and
a touch pen (5) exposedly adapted on the housing (1).

2. The wireless headset with touch pen of claim 1, wherein further comprising a microphone (4) arranged on the housing (1) and connected electrically to the controlling circuit unit (3).

3. The wireless headset with touch pen of claim 2, wherein the ear piece (2) and the microphone (4) are disposed on opposite ends of the housing (1).

4. The wireless headset with touch pen of claim 1, wherein the touch pen (5) is fixedly arranged on the housing (1).

5. The wireless headset with touch pen of claim 4, wherein the tip portion (51) of the touch pen (5) protrudes from the housing (1).

6. The wireless headset with touch pen of claim 4, wherein the tip portion (51) of the touch pen (5) protrudes from one end of the housing (1).

7. The wireless headset with touch pen of claim 1, wherein the touch pen (5) is removably arranged on the housing (1).

8. The wireless headset with touch pen of claim 7, wherein the tip portion (51) of the touch pen (5) protrudes from the housing (1).

9. The wireless headset with touch pen of claim 7, wherein the tip portion (51) of the touch pen (5) protrudes from one end of the housing (1).

10. The wireless headset with touch pen of claim 7, wherein an inserting hole (11) is formed on the housing (1) for receiving the touch pen (5).

11. The wireless headset with touch pen of claim 1, wherein the touch pen (5) is retractably disposed on the housing (1).

12. The wireless headset with touch pen of claim 11, wherein a sleeve (52) is arranged on the housing (1) for receiving the touch pen (5) and allowing the tip portion (51) to move selectively into and out of the sleeve (52).
